# EUROPEAN PATENT APPLICATION

(11) **EP 1 466 655 A1**
(43) Date of publication of application: **13.10.2004**
(21) Application number: 03425222.1
(22) Date of filing: 08.04.2003
(51) Int. Cl.: B01D 29/66

(54) **Modular strainer device for liquid under pressure with flushing valve inserted in an extractable body**

(71) Applicant: Aron S.r.l., 74100 Taranto (IT)
(72) Inventor: Abo, Giancarlo, Martina Franca (TA) (IT); Abo, Barbara, Martina Franca (TA) (IT)
(74) Representative: Russo, Saverio, Dott. Ing.

(57) **Abstract**

The strainer is different from already existing similar devices because its external cylindrical structure 1 is composed of two sections 1.1 and 1.2 which are compound parts to be assembled only by reciprocally fastening the relative opposite flanges 1.11 and 1.21, the flushing valve set being placed between them.

The flushing valve set 4 is fastened by means of the extremities of said two external cylindrical structures

The maintenance of all the component parts is performed by simply unfastening the flanges of the two external cylindrical structure

## Description

The invention deals with a valve set for a compound self-cleaning strainer to be used with liquids under pressure.

Self-cleaning strainers are commonly used to filter natural waters, drainage waters, acid fluids and poor quality waters employed in the cooling system of industries.

These strainers require a periodic cleaning by means of heavy streams of spouting water which remove the residues.

Net strainers in use at present are devices in which self-cleaning is accomplished by means of a throttle-valve diverting the flow and an exhaust-valve for the elimination of the residues, both valves being either automatically or manually operated.

In said strainers, in which the axes of the inlet and outlet sections form a 90° angle, the extremity opposite to the fluid inlet is closed by means of a cap permitting the inspection and the extraction of the strainer basket without removing the connections between the inlet and the outlet sections of the strainer and the pipe system of the plant inside which said strainer is included.

While the strainer is regularly filtering, the fluid enters into the inlet section, goes through the strainer basket - there into depositing the impurities - and goes out through the outlet section ready to be used; during this phase the exhaust-valve is closed.

Subsequently, the exhaust-valve opens, and the impurities gathered inside the strainer are discharged.

While the exhaust-valve is still open, after closing the flushing valve, the washing phase begins inside the strainer, by reversing the flow of the fluid through the filter element, so allowing the impurities to be taken away from the inner surface of the strainer.

At the end of the backwash cycle (a few seconds) the exhaust-valve is closed, the flushing valve opens and the strainer operates regularly once again.

The above described strainers are made of either inoxidizable steel or plastic materials such as polypropylene, but there are several drawbacks to the use of these devices.

Such drawbacks are chiefly due to the fact that a very complex maintenance is to be performed on the devices because, before pulling out the strainer out of the cylindrical structure inside which it is included, it is necessary to unfasten the backwash valve, which is sometimes difficult to accomplish when the strainer is small.

Another drawback is that the spindle which operates the backwash valve, though supported by the external cylindrical structure, can wear out the strainer basket since it has to go there through

A further drawback is that it is not possible to wash the basket in its section near the strainer mouth, and that to clean it up it is then necessary to pull out the whole strainer basket, requiring further maintenance.

Moreover, the strainer basket is assembled and fixed inside the external cylindrical structure by means of bolts or by means of a cylindrical band placed over the basket.

To avoid the above mentioned drawbacks, this invention solves the problem of the insertion of the flushing valve into a ring-like structure which also fixes the two sections forming the strainer, said two sections being, in turn, reciprocally connected by means of bolts set on two flanges placed at opposite ends.

The valve contrived and assembled as so far described, as well as the strainer having two separate sections, make it easier to disassemble the appliance and to perform maintenance.

The invention is described here below in detail and it is illustrated with the figures of the sheets here enclosed, which show respectively:
Fig.1 - longitudinal section of the strainer in orthogonal projection, showing the valve set according to the invention;
Fig.2 - orthogonal projection of the longitudinal section of the strainer shown in fig.1, the strainer being not yet assembled;
Fig.3 - longitudinal section of the strainer shown while regularly operating, with open flushing valve and closed exhaust-valve;
Fig.4 - longitudinal section of the strainer shown during the inner washing phase, with both the flushing valve and the exhaust-valve open;

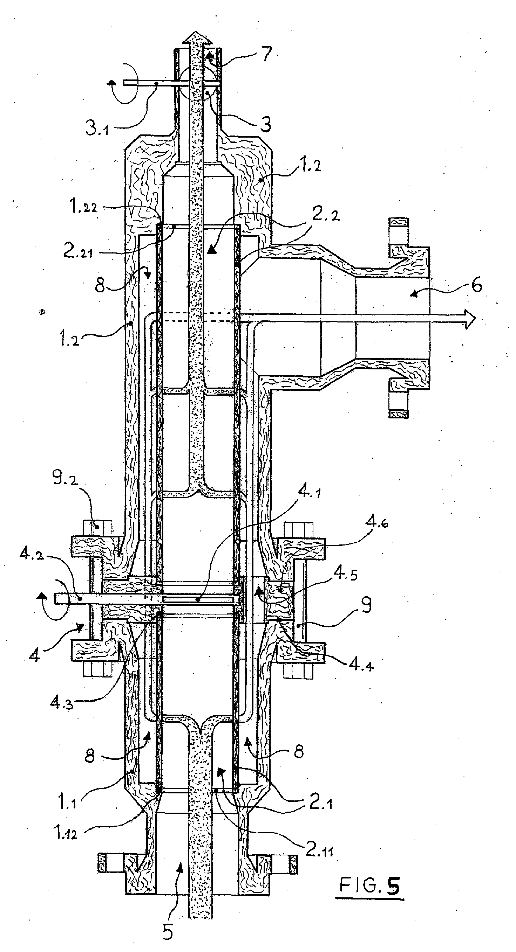

Fig.5 - longitudinal section of the strainer shown during the backwash phase, with closed flushing valve and open exhaust-valve;
Fig. 6 - the valve set seen from above, with the flushing valve open, and the flange below - also seen from above - by which the external cylindrical structure is applied;
Fig.7 - longitudinal section of the valve set and of the external cylindrical structure shown in fig.6,
Fig.8 - three-dimension view of the valve set and of the cylindrical structure shown in fig.7;
Fig.9 - the strainer seen from the outside, completely assembled, having the axis of the spindle which operates the flushing valve running parallel with the axis of the outlet section;
Fig. 10 - the strainer shown in fig. 9, illustrated from the opposite side.

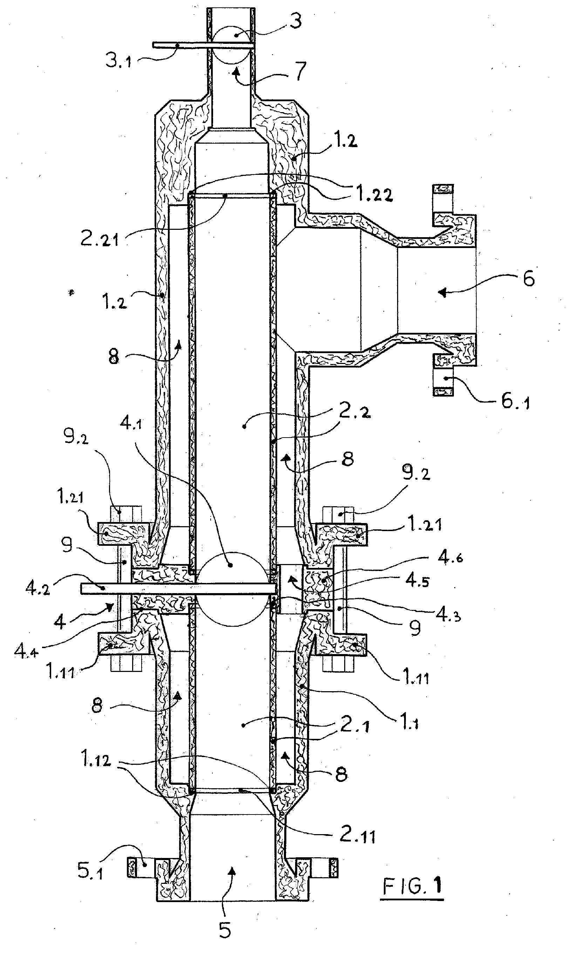

The strainer illustrated in fig. 1 is made up of a cylindrical structure 1 formed by two sections 1.1 and 1.2, by a strainer structure 2 formed, in turn, by two sections 2.1 and 2.2, by an exhaust-valve 3 and by a valve set 4 which regulates the flow and/or allows the strainer backwash operations.

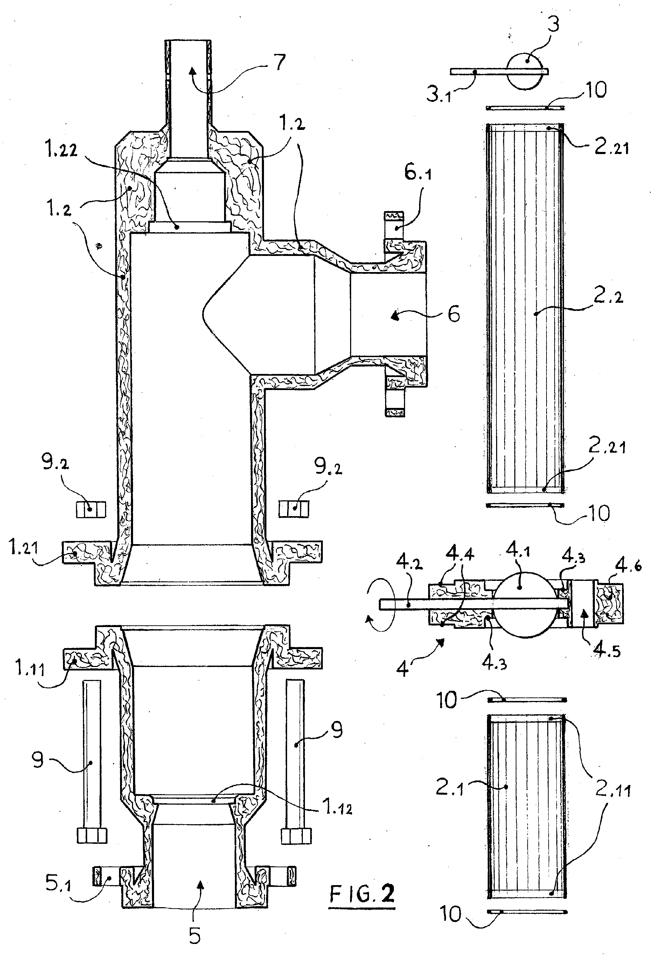

All the above components of the device, which are separately illustrated in fig.2, are made of plastic or, in alternative, metallic materials not liable to corrosion, or they are made of both plastic and metallic materials, and they can be used to filter sea waters, drainage waters, acid fluids and any other fluids.

The strainer object of the invention operates by means of a 2 bar hydraulic pressure (at least), without stopping the flow delivery not even during the self-cleaning cycle.

In order to get better filtration results than that usually obtained when using a traditionally perforated pipe, the device object of the invention includes net strainer baskets, with ring-like extremities, made of different materials, which are already available to be bought, and able to The self-cleaning function is regulated by an automatic control system of the flushing valve by means of PLC and it does not necessarily require staff assistance.

If electric grid is not available, a 9 volt feeding control system may regulate the self-cleaning function, as it happens in micro-irrigation plants.

The strainer may also be provided with a hand drive.

Considering the simple construction of the strainer and the materials it is made of, no maintenance is required even over long periods of time

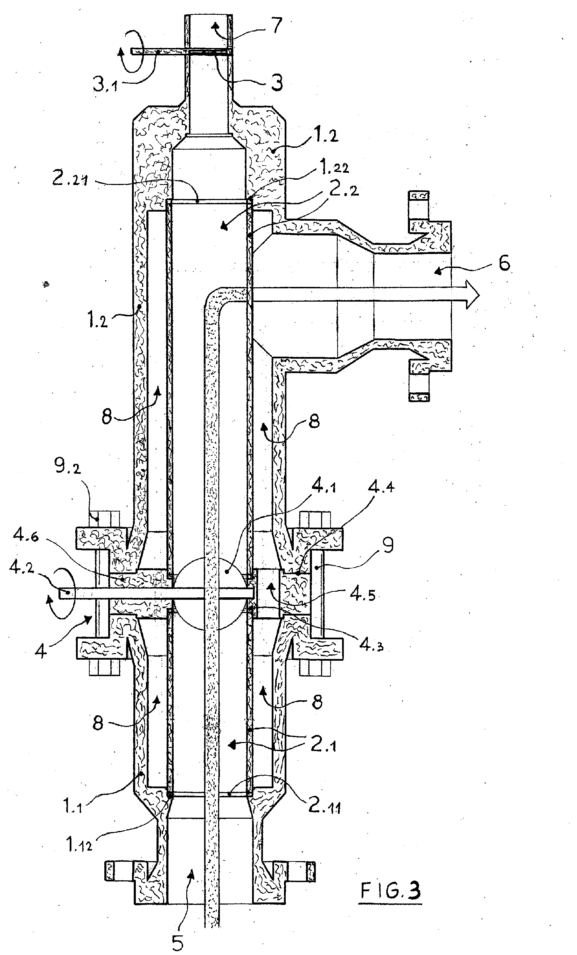

The regular function of the strainer, in normal conditions, is illustrated in fig.3: the fluid to be filtered enters into the strainer basket 2 through the inlet section 5 and, once filtered, goes out through an outlet section 6 placed at 90° in respect to the longitudinal set of the strainer, near the main plant.

The outlet section 6 is very wide in order to help the fluid flow, the flow speed is reduced in proximity to the outlet, letting it be equal to the speed inside the strainer.

The fluid is mainly filtered by section 2 2 of the strainer structure 2.

During the filtering phase the exhaust-valve 3, placed inside the exhaust-section 7, is closed whereas the flushing valve 4.1 is open.

At intervals, a washing phase may occur inside the strainer, during which the exhaust-valve 3 is open, by rotating the relative spindle 3.1, and as a result the residues go out through the exhaust-section 7 in consequence of the propulsion produced by the hydraulic flow inside the strainer.

The exhaust-section 7 has been illustrated in an embodiment coaxial with the longitudinal axis of the strainer; said section may also be orthogonal with the longitudinal axis, so that the strainer may be placed having its vertical axis perpendicular to the support face.

During this phase, the residues previously gathered inside the basket 2 are removed.

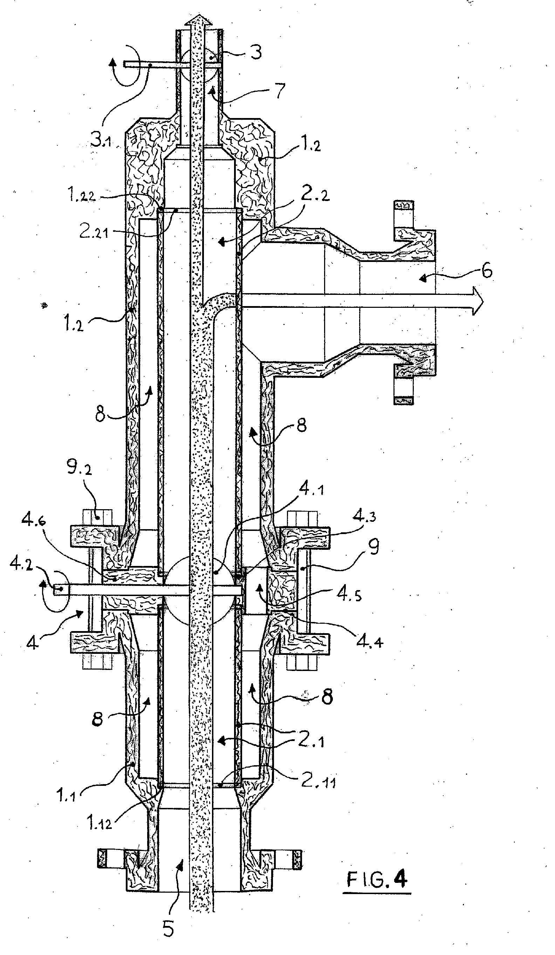

During the washing phase, illustrated in fig.4, the flushing valve 4.1 is open, just like it is when the filter is regularly running.

The valve set 4, placed between the two sections 1.1 and 1.2 of the external cylindrical covering 1 and between the two sections 2.1 and 2.2 of the cylindrical strainer basket 2, is composed of a ring-like structure 4.6 provided with two couples of grooves 4.3 and 4.4. supporting the two sections which form the strainer basket 2 and also fixing the two sections which form the cylindrical structure 1; the opposite extremities of the strainer baskets 2.1 and 2.2 are provided with collets 2.11 and 2.21 which are inserted into the grooves 1.12 and 1.22 of the external cylindrical structure 1

When the plate 4.1 of the valve set 4 rotates by means of the relative spindle 4.2 until it is perpendicular to the direction of the hydraulic flow, said flow is diverted into the interstice 8 between the inner surface of the external cylindrical structure 1 and the external surface of the strainer basket 2, after passing through the section 2.1 of the strainer basket, and then it is conveyed partly outside, through the outlet section 6, and partly through the exhaust-section 7 at the end of the backwash of the strainer basket: during this phase the exhaust-valve 3 is open.

The backwash is only performed inside section 2 2 of the strainer basket, not inside section 2.1.

Said section is cleaned by unscrewing the bolts 9 connecting sections 1.1 and 1.2 of the external cylindrical structure 1, so that section 2.1 of the strainer basket may be pulled out.

This operation also allows to clean the valve set 4, to perform the relative maintenance and, if necessary, to easily change section 2.2 of the strainer basket.

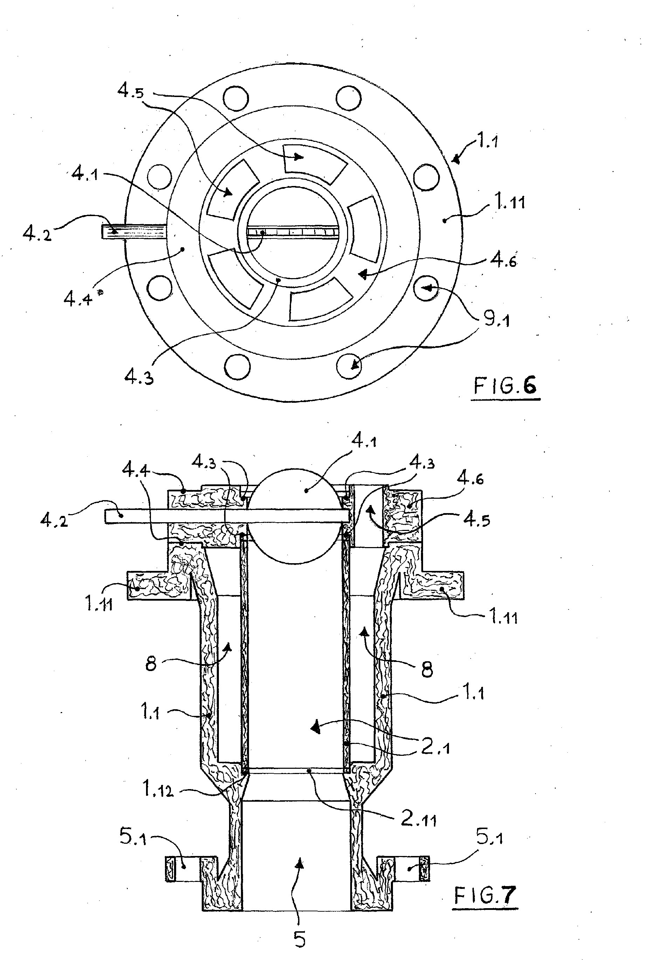

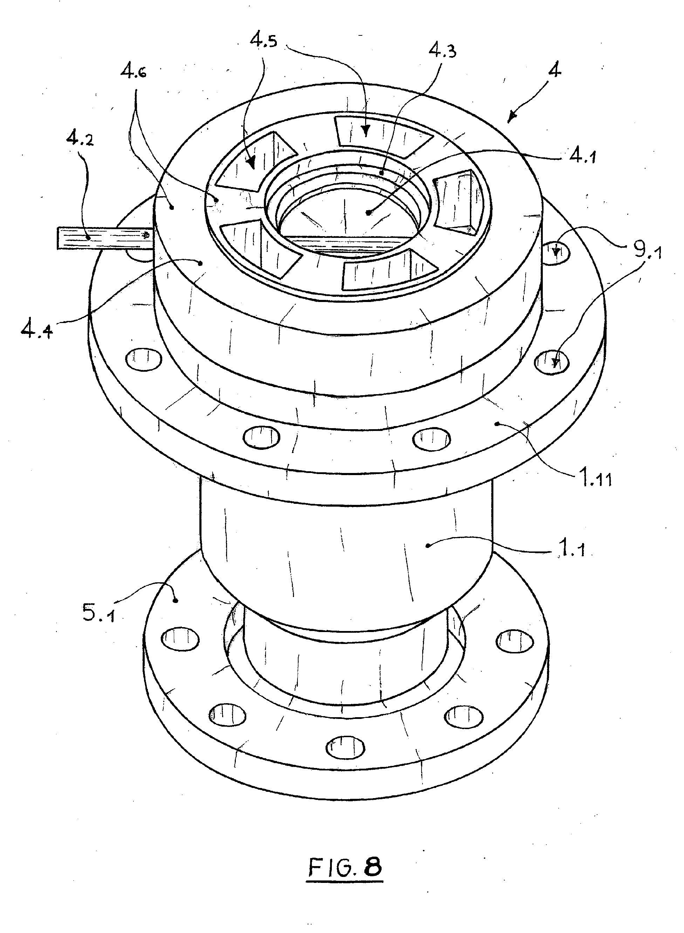

The valve set according to the invention, which is assembled on the external cylindrical section 1.1 and provided with the strainer basket 2.1, is illustrated from above, through its section and by a three-dimension view, in fig.6, 7 and 8, respectively.

As it can be noticed from the figures, the valve set, having a ring-like shape, is provided with holes 4.5 which allow the hydraulic flow not to be interrupted through the interstice even during the backwash cycle.

It can also be seen from the figures, that the spindle 4.2, which allows the rotation of the plate 4.1 of the valve, passes through the ring-like structure 4.6 of the valve set 4 without interfering with the hydraulic flow through the holes.

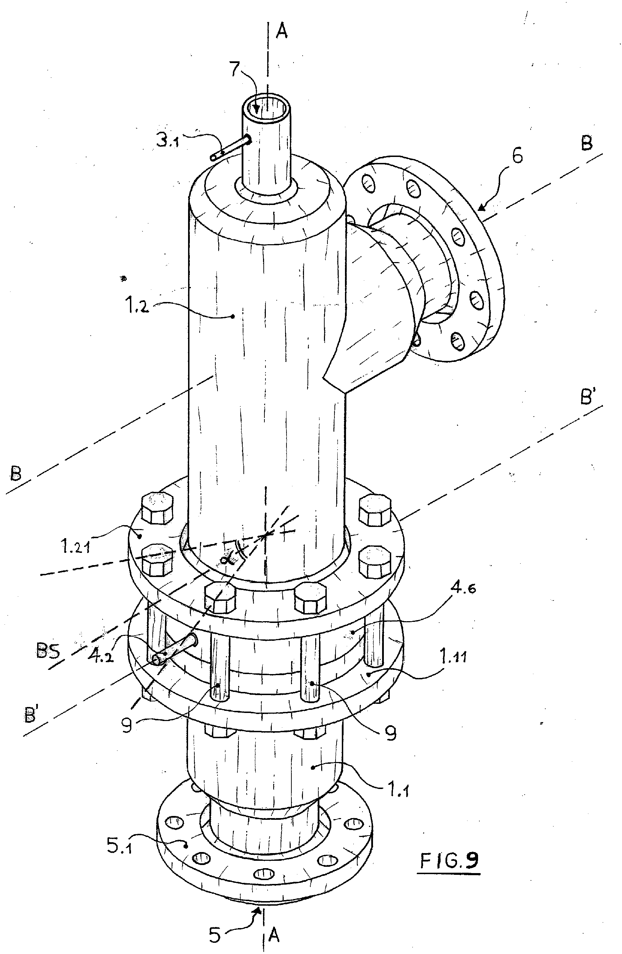

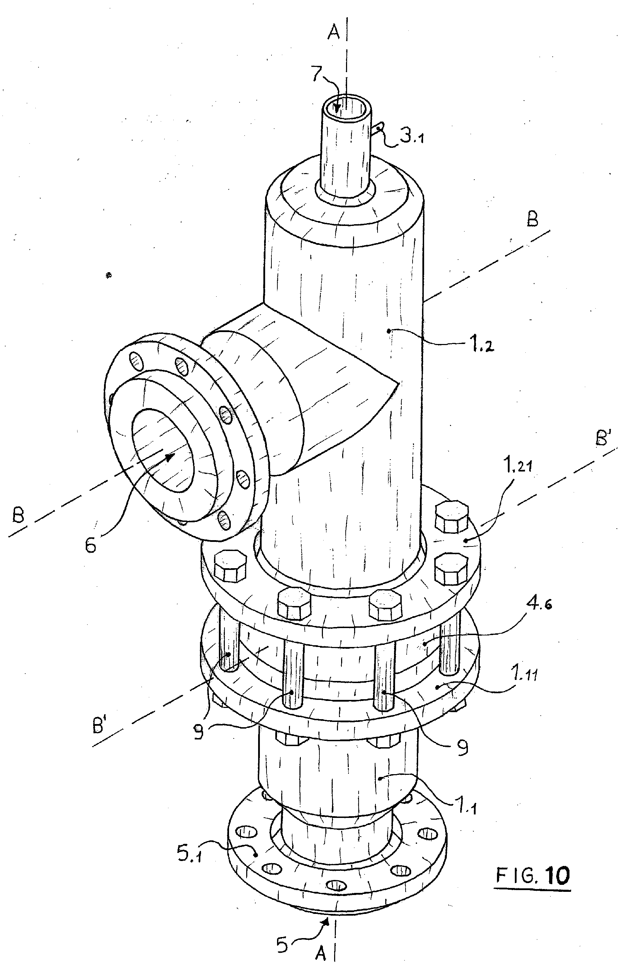

Fig.9 and 10 are three-dimension views of the completely assembled strainer seen from the outside.

Fig.9 illustrates in detail the connection between flanges 1.11 and 1.21 of the external cylindrical structure 1 for the fixing of the valve set 4, the inlet section 5 with the relative flange 5.1 and the exhaust-section 7; fig. 10 instead illustrates in detail the outlet section 6 with the relative flange 6.1.

As it can be seen from the figures, in order to let the axis B' of the spindle 4.2 which rotates the plate 4.1 of the flushing valve be parallel with the axis B of the cylindrical outlet section 6, and in order not to have the movement of said spindle hindered by the bolts 9 when the external cylindrical section 1.1 is connected to section 1.2, the bisecting line of the angle α between two holes on the flange 1 21 must be comprehended inside the radial plane passing through the axis A of the cylindrical structure 1 and through the axis B of the outlet section 6.

In order to have a tighter and more perfect joint between the two sections of the basket and the external cylindrical structure, ring-like gaskets 10 are inserted into grooves 4.3, 1.12 and 1.22.

The flanges 1.11 and 1.21 that reciprocally block the two parts of the cylindrical external structure 1, can also not form part of this last, that is, can be constructed in order to position them in the most convenient manner, so that the spindle 4.2, that actions the flushing valve 4.1, does not interfere with the bolts 9 of said flanges.

## Claims

1. "Modular strainer device for liquid under pressure with flushing valve inserted in an extractable body ", including an external cylindrical structure, a filtering structure, a valve for the interception of the flow and an exhaust-valve, **characterised by** the fact that the external cylindrical structure (1) is divided into two sections (1.1) and (1.2) each coaxially containing one of the two sections (2.1) and (2.2) of the strainer basket (2), and by the fact that the above sections are reciprocally connected, the flushing valve set (4) being placed between them, the two sections of the external cylindrical structure being provided with flanges (1.11) and (1.21) so that they can be fixed to the above said valve set by means of bolts (9).

2. Strainer as claimed in claim 1), **characterised by** the fact that the exhaust-section (7) is coaxial with the longitudinal axis ofthe strainer or, in alternative, orthogonal to said axis

3. Strainer as claimed in claim 1), **characterised by** the fact the flushing valve set (4) is made of a ring-like structure (4.6) provided with longitudinal holes (4.5) allowing the hydraulic flow to pass through when the valve for the interception of flow (4.1) is closed in order to let the fluid pass from the first section (2.1) to the second section (2.2) of the strainer basket through the interstice (8) formed between the external surface of the strainer basket (2) and the inner surface of the external cylindrical structure (1), when it is necessary to backwash the strainer and remove the residues from the filtering surface of said basket (2), the ring-like structure (4.6) being provided with two opposite round grooves (4.4) for the insertion of the round extremities of the two external cylindrical structures (1.1) (1.2), and being also provided with two opposite round grooves (4.3) through which the filtering structures (2.1) (2.2) are fastened, the opposite extremities (2.11) (2.21) of said filtering structures being inserted into grooves (1.12) (1.22) inside the two external cylindrical structures (1.1) (1.2)

4. Strainer as claimed in previous claims, **characterised by** the fact that the plane passing through the longitudinal axis (A) of the cylindrical structure (1) and through the axis (B) of the outlet section (6) of said cylindrical structure, comprehends the bisecting line (BS) of the angle α formed by two consecutive holes - opposite the outlet section (6) - on the flange (1.21) joined to the cylindrical structure (1.2).

5. Strainer as claimed in previous claims, **characterised by** the fact that the spindle (4.2) which rotates the flushing valve (4.1), also supports said flushing valve, and by the fact that said spindle passes through the ring-like structure (4 6) of the valve set (4) without perforating the strainer baskets, the protruding extremity of said spindle passing in fact through said ring-like structure outside its filtering sections.

6. Strainer as claimed in previous claims, **characterised by** the fact that its components are completely made of plastic or, in alternative, metallic materials not liable to corrosion, or they are made of both plastic and metallic materials.

7. Strainer as claimed in claims 1) and 3), **characterised by** the fact that the joint of the two structures (2.1) and (2.2) of the strainer basket (2) to the valve set (4) and to the external cylindrical structure (1) is obtained by means of suitable ring-like gaskets (10) inserted into grooves (4.3) of the valve set, and into grooves (1.12) and (1.22) of the external cylindrical structure.

8. Strainer as claimed in claim 1), **characterised by** the fact that the flanges (1.11) and (1 21)may be incorporated or not, to the cylindrical structure (1)
